# EUROPEAN PATENT SPECIFICATION

(11) **EP 0 279 897 B1**
(45) Date of publication and mention of the grant of the patent: **14.07.1993**
(21) Application number: 87112322.0
(22) Date of filing: 25.08.1987
(51) Int. Cl.: G06K 11/06, G06F 3/033

(54) **Joystick**
Steuerknüppel
Manette de jeu

(30) Priority: 23.02.1987 JP 40656/87
(43) Date of publication of application: 31.08.1988
(73) Proprietor: Ascii Corporation, Minato-ku Tokyo (JP)
(72) Inventor: Ishiwata, Takehiko, Kawasaki-shi Kanagawa (JP); Yoshida, Norifumi, Hachiouji-shi Tokyo (JP)
(74) Representative: Ritter und Edler von Fischern, Bernhard,Dipl.-Ing.

(56) References cited:
- DE-U- 8 709 863
- US-A- 4 148 014
- US-A- 4 501 424
- IBM TECHNICAL DISCLOSURE BULLETIN, vol. 28, no. 8, January 1986, pages 3309-3311, New York, US; "Variable trigger-control for a digital man-machine interface"
- YOUR COMPUTER, September 1984, pages 96-97, Sutton, GB; "Robot attack"

## Description

The present invention relates to a joystick comprising a stick lever for specifying directions and a trigger button wherein there is provided a speed adjust button provided correspondingly to said trigger button and adapted to be able to control an intermittent or continuous operation specified by said trigger button. Such a joystick is known from US-A-4 501 424. The invention is applicable for use in a computer game.

Conventionally, a joystick for use in a computer game comprises a box of the order of 10cm square containing therein a control part for control of 8 directions, and a stick lever provided on the box such that it can be operated to control the directions. The joystick is also provided with trigger buttons which are used to shoot balls, bombs and the like.

When the conventional joystick is applied to a shooting type of game or the like, in some cases, it is necessary to press down the tigger buttons very often.

Also, since the conventional joystick lacks stability, if the stick lever of the joystick is operated with a strong force, the joystick may be moved out of its installation place such as a desk or the like, resulting in a poor operationability.

In the above-mentioned conventional joystick, a player must continue pressing down the trigger buttons long and intermittently, which causes the player to be greatly tired and also reduces the life of the joystick.

An object of the present invention is to increase the range of adjustability of a joystick whilst simultaneously improving operationability.

Another object of the invention is to provide an improved joystick provided with a stick lever and a trigger button which is enhanced in operationability and is relatively unlikely to fatigue a player.

According to the invention, there is provided a joystick as specified in claim 1.

The exact nature of this invention, as well as other objects and advantages thereof, will be readily apparent from consideration of the following specification relating to the accompanying drawings, in which like reference characters designate the same or similar parts throughout the figures thereof wherein :
Figure 1 is a perspective view of an embodiment of a joystick according to the invention;
Figure 2 is a block diagram of the above embodiment of the invention; and
Figure 3 is a circuit diagram to show the above embodiment more concretely.

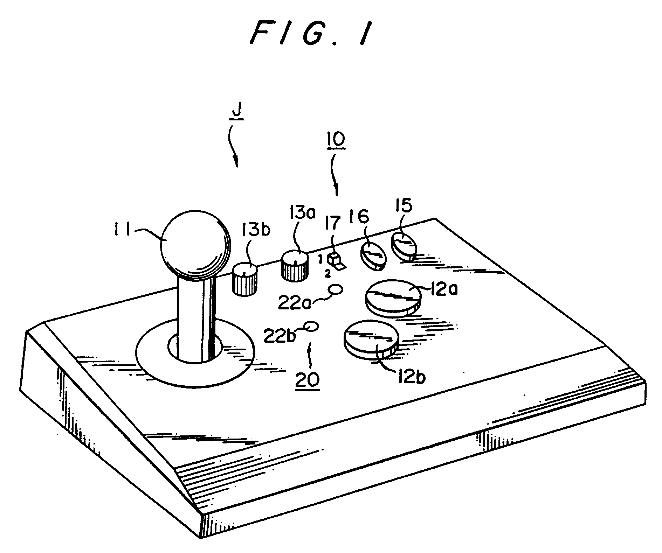

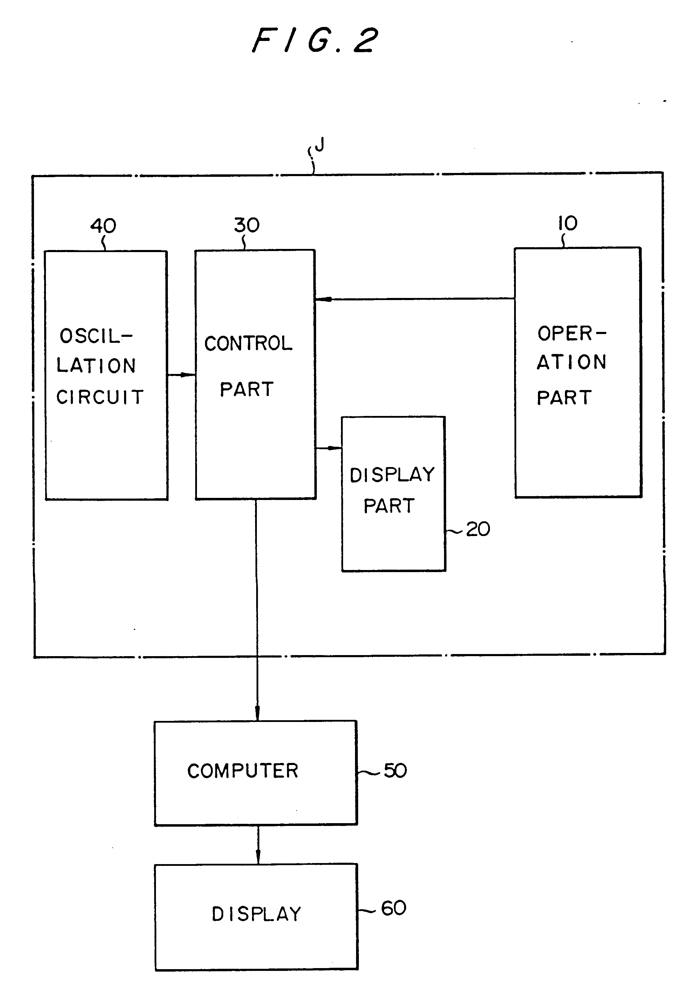

In Figure 1, there is shown a perspective view of a preferred embodiment of a joystick constructed in accordance with the invention and, in Figure 2, there is shown a block diagram of the above-mentioned embodiment.

A joystick, designated by J in the drawings, comprises an operation part 10 having a plurality of buttons, a display part 20 adapted to display to which of the above-mentioned buttons a continuous shooting mode is set, a control part 30 adapted to perform various kinds of control according to the operation of the operation part 10, and an oscillation circuit 40 adapted to generate a pulse necessary to perform the continuous shooting mode. The above-mentioned joystick J is connected to a computer 50 and the contents of a game are to be displayed on a display 60.

In Fig. 1, the operation part 10 of the joystick J includes a stick lever 11 which is used to specify directions, a first trigger button 12a, a second trigger button 12b, a first speed adjust button 13a, a second speed adjust button 13b, a select button 15 which is used to select games, a start button 16 used to start the games, and a button 17 which is used to specify the number of players.

The first speed adjust button 13a is provided so as to correspond to the first trigger button 12a, is adapted to be able to adjust the speed i.e. rate of an intermittent operation or a continuous operation (the term "intermittent operation or continuous operation" is expressed hereinafter simply as " continuous operation".) specified by the trigger button 12a, and is provided with a switch function to stop the continous operation. Also, the second speed adjust button 13b is provided so as to correspond to the second trigger button 12b, is adapted to be able to adjust the speed of a continuous operation specified by the trigger button 12b, and is provided with a switch function to stop the continous operation.

If the two speed adjust buttons 13a and 13b are operated simultaneously, then the operation specified by the trigger button 12a and the operation specified by the trigger button 12b can be executed simultaneously and continuously. Although two sets of trigger buttons and speed adjust buttons are arranged in the illustrated embodiment as mentioned above, alternatively, one set or 3 or more sets of trigger buttons and speed adjust buttons may be provided.

The display part 20 includes LEDs 22a and 22b which are adapted to indicate that the speed adjust buttons 13a, 13b are being operated, respectively.

Also, the control part 30 is an example of control means which is adapted to be able to control the operation of the whole joystick J as well as control the above-mentioned continuous operation to the speeds set by the speed adjust buttons 13a, 13b.

It should be noted here that the above-mentioned continuous shooting mode means the above-mentioned intermittent or continous operation.

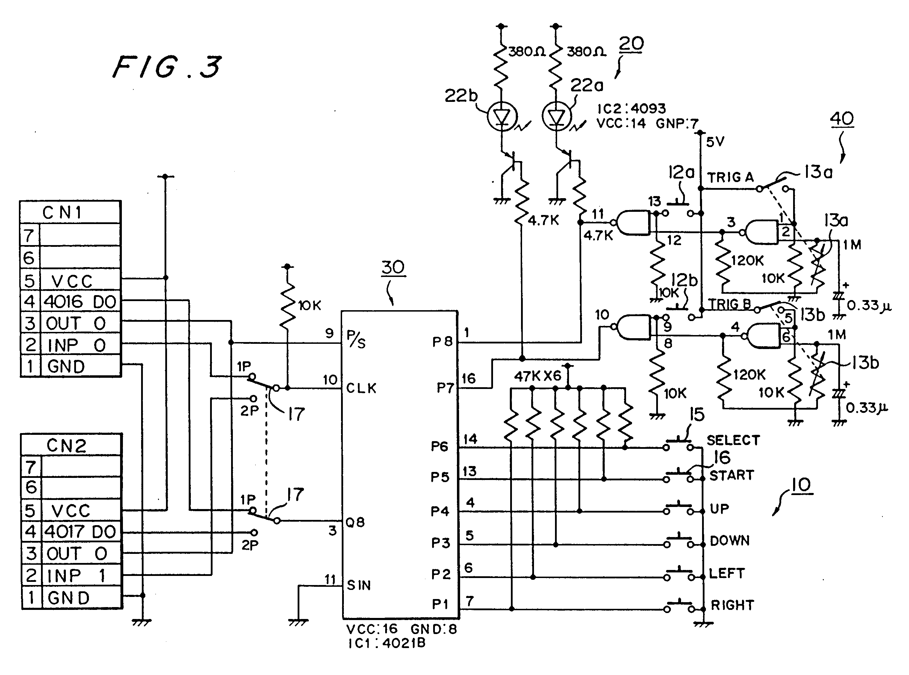

Referring now to Fig. 3, there is shown a circuit diagram which illustrates the embodiment of Fig. 2 more concretely.

In Fig. 3, the control part 30 of the joystick J employs 4021B which is a standard CMOS IC product, and, as a gate of the oscillation circuit 40, 4093 which is a standard CMOS IC product is used. An IC port SIN used in the control part 30 is used to switch the parallel/serial input. A pin 4016 DO in connector CN1 which connects to the computer 50 represents the O order of 8 bits in the 4016 address, and a pin 4017 DO in the connector CN2 represents the O order of 8 bits in the 4017 address.

Next, the operation of the above-mentioned embodiment will be described below.

First, the power supply of the computer 50 is put into work to display a plurality of game names. After then, if the select button 15 is depressed, then a desired game can be selected. Next, the start button 16 is pressed down to thereby execute the game selected, that is, the selected game can be initiated.

After then, in order to develop the game, the stick lever 11 may be inclined in a given direction or the trigger button 12a or 12b may be pressed down. For example, when a bomb to destroy an object in the air is shot, the trigger button 12a may be depressed, and, when shooting a bomb to destroy an object on the ground, the trigger button 12b may be pressed down.

On the other hand, according to the progress of the game, when it is desired to continuously shoot bombs at the object in the air, the speed adjust button 13a may be turned on to set the speed of the continous shooting operation (or continuous operation) to a given speed. When shooting bombs continuously at the object on the ground, the speed adjust button 13b may be turned on to set the speed of the continuous shooting operation (or continuous operation) to a given speed. Also, in order to shoot the bombs at the objects in the air and on the ground continuously and simultaneously, the two speed adjust buttons 13a and 13b are simultaneously turned on to set the continous shooting operations (or continuous operations) to the given speeds, respectively.

In the above-mentioned embodiment, to perform the continuous shooting operation, the speed adjust button 13a or 13b may simply be turned on but the trigger button 12a or 12b need not be turned on intermittently, so that the fatigue of the player can be reduced to a great extent, the life of the joystick J can be extended and the operationability of the joystick J can be improved. Also, due to the fact that the speed of the above-mentioned continous shooting operation can be set to a desired level, the player is able to enjoy the game according to the contents of the game or the level of the player.

When the speed adjust button 13a is operated in combination with trigger button 12a, then LED 22a turns on, while when the speed adjust button 13b is operated in combination with trigger button 12b, LED 22b turns on.

In order to remove the continuous operations of the speed adjust button 13a and/or the speed adjust button 13b after they are used, the speed adjust buttons 13a and/or 13b may be turned to turn off the associated switches, with the result that the continuous shooting mode that has been set so far can be removed. After then, to set the same continuous shooting mode again or a different continuous shooting mode, the same operation as mentioned above may be performed.

As has been described hereinbefore, according to the invention, there is eliminated the need for the player to continue depressing the trigger button for a long time and intermittently and, therefore, the fatigue of the player can be relieved greatly, the life of the joystick can be extended, and the operationability of the joystick can be enhanced.

## Claims

1. A joystick (J) for use in a computer game comprising a stick lever (11) for specifying directions and a trigger button (12a, 12b) specifying an intermittent or continuous operation and having a speed adjust button (13a, 13b) correspondingly to said trigger button (12a, 12b) characterised in that:
said speed adjust button is adapted to be able to adjust the speed of said intermittent or continuous operation and in that :
said speed adjust button is adjustable to each of a plurality of signalling positions; and
each position specifies a respective different rate of said intermittent or continuous operation.

2. A joystick (J) as set forth in Claim 1, wherein more than one trigger button is provided and the same number of speed adjust buttons as said trigger buttons (12a, 12b).

3. A joystick according to Claim 2 wherein two trigger buttons and two speed adjust buttons are provided.

4. A joystick according to any preceding claim wherein the position of the or each speed adjust button is continuously adjustable.

5. A joystick (J) as set forth in any preceding claim wherein there is provided an LED (22a, 22b) adapted to indicate that said intermittent or continous operation is being executed due to the depressing of said trigger button (12a, 12b).

## Patentansprüche

1. Joystick (J) zur Verwendung in einen Computerspiel, umfassend einen Stabhebel (11) zum Bestimmen von Richtungen und einen Auslöseknopf (12a, 12b), der einen intermittierenden oder fortlaufenden Betrieb bestimmt, und mit einem Geschwindigkeitseinstellknopf (13a, 13b), dem Auslöseknopf (12a, 12b) entsprechend, dadurch gekennzeichnet, daß
der Geschwindigkeitseinstellknopf geeignet ist, die Geschwindigkeit des intermittierenden oder fortlaufenden Betriebs einzustellen, und daß
der Geschwindigkeitseinstellknopf auf je eine von einer Mehrzahl von Signalstellungen einstellbar ist; und
jede Stellung eine entsprechende, unterschiedliche Rate des intermittierenden oder fortlaufenden Betriebs festlegt.

2. Joystick (J) nach Anspruch 1, dadurch gekennzeichnet, daß mehr als ein Auslöseknopf und eine gleiche Anzahl von Geschwindigkeitseinstellknöpfen wie Auslöseknöpfe (12a, 12b) vorgesehen sind.

3. Joystick nach Anspruch 2, dadurch gekennzeichnet, daß zwei Auslöseknöpfe und zwei Geschwindigkeitseinstellknöpfe vorgesehen sind.

4. Joystick nach einen der vorigen Ansprüche, dadurch gekennzeichnet, daß die Stellung des oder jedes Geschwindigkeitseinstellknopfs kontinuierlich einstellbar ist.

5. Joystick (J) nach einem der vorigen Ansprüche, dadurch gekennzeichnet, daß eine LED (22a, 22b) vorgesehen ist, die geeignet ist anzugeben, daß der intermittierende oder fortlaufende Betrieb durch das Niederdrücken des Auslöseknopfes (12a, 12b) ausgeführt wird.

## Revendications

1. Manette de jeu (J) destinée à être utilisée dans un jeu d'ordinateur comprenant un levier de manette (11) pour spécifier des directions et un bouton de déclenchement (12a, 12b) spécifiant un fonctionnement intermittent ou continu et ayant un bouton de réglage de vitesse (13a, 13b) correspondant audit bouton de déclenchement (12a, 12b) caractérisé en ce que:
ledit bouton de réglage de vitesse est adapté pour être capable de régler la vitesse dudit fonctionnement intermittent ou continu et en ce que:
ledit bouton de réglage de vitesse est réglable pour chaque position d'une pluralité de positions de signaux; et
chaque position spécifie un rapport respectif différent dudit fonctionnement intermittent ou continu.

2. Manette de jeu (J) selon la revendication 1, dans laquelle on a fourni plus qu'un bouton de déclenchement et le même nombre de boutons de réglage de vitesse que dedits boutons de déclenchement (12a, 12b).

3. Manette de jeu (J) selon la revendication 2 dans laquelle on a fourni deux boutons de déclenchement et deux boutons de réglage de vitesse.

4. Manette de jeu (J) selon l'une quelconque des revendications précédentes dans laquelle la position de chaque bouton de réglage de vitesse est réglable en continu.

5. Manette de jeu (J) selon l'une quelconque des revendications précédentes dans laquelle il est fourni une diode électroluminescente (22a, 22b) adaptée pour indiquer que ledit fonctionnement intermittent ou continu est en cours du fait de l'enfoncement dudit bouton de déclenchement (12a, 12b).
